(19) Europäisches Patentamt
European Patent Office
Office européen des brevets

(11) **EP 4 506 836 B1**

(12) **EUROPEAN PATENT SPECIFICATION**

(45) Date of publication and mention
of the grant of the patent:
**13.05.2026 Bulletin 2026/20**

(21) Application number: **24773935.2**

(22) Date of filing: **08.03.2024**

(51) International Patent Classification (IPC):
$G06F\ 17/16^{(2006.01)}$    $G06Q\ 50/06^{(2024.01)}$
$G06Q\ 30/018^{(2023.01)}$    $G06Q\ 10/0639^{(2023.01)}$
$G06Q\ 10/101^{(2023.01)}$    $G06Q\ 10/04^{(2023.01)}$
$H02J\ 3/00^{(2026.01)}$

(52) Cooperative Patent Classification (CPC):
**G06Q 30/018; G06Q 10/04; G06Q 10/06393;
G06Q 10/101; G06Q 50/06;** H02J 3/00;
H02J 2103/30; H02J 2103/35; Y02P 90/84

(86) International application number:
**PCT/CN2024/080721**

(87) International publication number:
**WO 2024/193368 (26.09.2024 Gazette 2024/39)**

(54) **DISTRIBUTED COLLABORATIVE PRVACY CALCULATION METHOD AND SYSTEM FOR CARBON EMISSION IN A PLURALITY OF POWER GRIDS**

VERTEILTES KOOPERATIVES DATENSCHUTZKONFORMES VERFAHREN UND -SYSTEM FÜR DIE BERECHNUNG VON KOHLENSTOFFEMISSIONEN IN EINEM MULTI-STROMNETZ

PROCÉDÉ ET SYSTÈME COOPÉRATIFS DISTRIBUÉS CONFORMES À LA PROTECTION DES DONNÉES POUR LE CALCUL DES ÉMISSIONS DE CARBONE DANS UN RÉSEAU ÉLECTRIQUE MULTIFLUX

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.03.2023 CN 202310259754**

(43) Date of publication of application:
**12.02.2025 Bulletin 2025/07**

(73) Proprietor: **Big Data Center of State Grid
Corporation of China
Xicheng District, Beijing 100052 (CN)**

(72) Inventors:
- **YANG, Wei
  Beijing 100052 (CN)**
- **CHEN, Xiang
  Beijing 100052 (CN)**
- **SONG, Jinwei
  Beijing 100052 (CN)**
- **LIU, Wenli
  Beijing 100052 (CN)**

- **SONG, Jimeng
  Beijing 100052 (CN)**
- **SHI, Xin
  Beijing 100052 (CN)**
- **YUAN, Qiheng
  Beijing 100052 (CN)**
- **ZHANG, Yushu
  Beijing 100052 (CN)**
- **ZHANG, Yihong
  Beijing 100052 (CN)**
- **LIU, Wensi
  Beijing 100052 (CN)**
- **JIANG, Peng
  Beijing 100052 (CN)**
- **LI, Yanxi
  Beijing 100052 (CN)**

(74) Representative: **Hannke Bittner & Partner mbB
Regensburg
Prüfeninger Straße 1
93049 Regensburg (DE)**

(56) References cited:
CN-A- 114 511 128    CN-A- 114 757 457
CN-A- 114 819 626    CN-A- 115 481 898
CN-A- 115 481 898    CN-A- 115 693 650
CN-A- 115 758 072    CN-A- 115 758 072
CN-A- 116 451 001    US-A1- 2020 372 588

**Description**

**TECHNICAL FIELD**

The present disclosure relates to the field of carbon emission accounting in a power grid, and specifically, to a distributed collaborative privacy calculation method and system for carbon emission in a plurality of power grids.

**BACKGROUND**

Electricity carbon emission intensity, also known as an electricity carbon emission factor, refers to a carbon dioxide emission amount per unit electricity consumption. In other words, the electricity carbon emission intensity is calculated by dividing a carbon emission amount by a total electricity consumption. This indicator can be used to analyze a relationship between an electricity consumption and a carbon emission amount in a region. A carbon intensity indicator can also quantitatively measure a development level of clean energy using electricity in a country or region, and is of great significance for monitoring, analyzing, and predicting macro green development in a region. A regional electricity carbon emission factor can be used to enable an enterprise in a region to calculate indirect carbon emission caused by electricity usage of the enterprise. In a specific calculation method, the enterprise multiplies the regional electricity carbon emission factor by an electricity quantity used by the enterprise in the region. This method is in line with a "location-based method" proposed by a greenhouse gas (GHG) protocol. After calculating an electricity carbon emission amount of the enterprise, the enterprise can purchase a green certificate as required or adopt other carbon reduction measures to reduce its carbon emissions.

At present, each country generally completes power supply through collaboration of a plurality of regions, and each region is responsible for power supply of a plurality of sub-regions, with at least one power grid disposed in each sub-region. At present, data of each region is kept confidential, and only public data is disclosed. Therefore, when a carbon emission amount in each sub-region of a country is accounted, cross-organization data fusion is required. This can easily lead to leakage of scheduling data between important sub-regions of each organization. In addition, there are slight differences between a range of a power grid disposed in each sub-region of the region and a range of the sub-region. If an average carbon emission factor in a range of each power grid is used for calculation, the carbon emission factor covers an excessive range. A calculation result cannot accurately reflect a differential structure of a power source in each sub-region, resulting in a different electricity carbon emission factor for each sub-region. This further leads to inaccurate accounting of an indirect carbon dioxide emission amount in each sub-region.

CN115481898A is prior art disclosing calculating carbon emissions in a plurality of power grids.

**SUMMARY**

In order to overcome the above shortcomings in the prior art, the present disclosure provides a distributed collaborative privacy calculation method and system for carbon emission in a plurality of power grids.

The present disclosure provides the following technical solutions.

The present disclosure provides a distributed collaborative privacy calculation method for carbon emission in a plurality of power grids, including:

obtaining a transferred electricity quantity between regions, obtaining a generating capacity of a sub-region under jurisdiction of each of the regions, a transferred electricity quantity between sub-regions, and a generating capacity of energy of the sub-region, and constructing an electricity quantity exchange matrix between the regions, and a power generation information matrix, an electricity quantity exchange matrix, and a power-generation carbon emission information matrix of each of the regions based on the obtained information;

calculating a corresponding electricity carbon flow information matrix based on the power generation information matrix and the electricity quantity exchange matrix of each of the regions; and

constructing an electricity carbon emission balance equation based on the electricity carbon flow information matrix and the power-generation carbon emission information matrix of each of the regions, and the electricity quantity exchange matrix between the regions, and calculating an electricity carbon emission factor matrix of each of the regions, where the electricity carbon emission factor matrix of the region includes an electricity carbon emission factor of the sub-region under the jurisdiction of the region.

Preferably, the electricity carbon emission balance equation is expressed by a following calculation formula:

$$\begin{bmatrix} M_1 & \cdots & P_{\tau 1} & \cdots & P_{L1} \\ \vdots & \ddots & \vdots & \cdots & \vdots \\ P_{1\tau} & \cdots & M_\tau & \cdots & P_{L\tau} \\ \vdots & \cdots & \vdots & \ddots & \vdots \\ P_{1L} & \cdots & P_{\tau L} & \cdots & M_L \end{bmatrix} \begin{bmatrix} \lambda_1 \\ \vdots \\ \lambda_\tau \\ \vdots \\ \lambda_L \end{bmatrix} = \begin{bmatrix} C_1 \\ \vdots \\ C_\tau \\ \vdots \\ C_L \end{bmatrix}$$

where $M_\tau$ represents an electricity carbon flow information matrix of a $\tau^{th}$ region; $P_{\tau L}$ represents an electricity quantity exchange matrix from the $\tau^{th}$ region to an $L^{th}$ region; $P_{L\tau}$ represents an electricity quantity exchange matrix from the $L^{th}$ region to the $\tau^{th}$ region; $\lambda_\tau$ represents an electricity carbon emission factor matrix of the $\tau^{th}$ region; and $C_\tau$ represents a power-generation carbon emission information matrix of the $\tau^{th}$ region.

Preferably, the electricity carbon emission factor matrix is calculated according to a following calculation formula:

$$\lambda_\tau = \lambda_\tau^{(0)} - \sum_\mu D_{\mu\tau} \lambda_\mu$$

where

$$\lambda_\tau^{(0)} = M_\tau^{-1} C_\tau$$

$$D_{\mu\tau} = M_\tau^{-1} P_{\mu\tau}$$

where $\lambda_\tau$ represents the electricity carbon emission factor matrix of the $\tau^{th}$ region; $C_\tau$ represents the power-generation carbon emission information matrix of the $\tau^{th}$ region; $\lambda_\mu$ represents an electricity carbon emission factor matrix of a $\mu^{th}$ region; $P_{\mu\tau}$ represents an electricity quantity exchange matrix from the $\mu^{th}$ region to the $\tau^{th}$ region; $M_\tau$ represents the electricity carbon flow information matrix of the $\tau^{th}$ region; $D_{\mu\tau}$ represents an interactive power flow matrix between sub-regions from the $\mu^{th}$ region to the $\tau^{th}$ region; and $\lambda_\tau^{(0)}$ represents an initial iteration value of the electricity carbon emission factor matrix of the $\tau^{th}$ region.

Preferably, the power generation information matrix of the region is expressed by a following calculation formula:

$$E = \begin{bmatrix} E_1 & 0 & \cdots & 0 & \cdots & 0 \\ 0 & E_2 & \cdots & 0 & \cdots & 0 \\ \vdots & \vdots & \ddots & \vdots & \cdots & \vdots \\ 0 & 0 & \cdots & E_i & \cdots & 0 \\ \vdots & \vdots & \vdots & \vdots & \ddots & \vdots \\ 0 & 0 & \cdots & 0 & \cdots & E_N \end{bmatrix}$$

where $E$ represents the power generation information matrix of the region, $E_i$ represents a generating capacity of an $i^{th}$ sub-region under the jurisdiction of the region, and $N$ represents a quantity of sub-regions under the jurisdiction of the region;

the electricity quantity exchange matrix of the region is expressed by a following calculation formula:

$$P = \begin{bmatrix} 0 & P_{2,1} & \cdots & P_{i,1} & \cdots & P_{N,1} \\ P_{1,2} & 0 & \cdots & P_{i,2} & \cdots & P_{N,2} \\ \vdots & \vdots & \ddots & \vdots & \cdots & \vdots \\ P_{1,j} & P_{2,j} & \cdots & 0 & \cdots & P_{N,j} \\ \vdots & \vdots & \vdots & \vdots & \ddots & \vdots \\ P_{1,N} & P_{2,N} & \cdots & P_{i,N} & \cdots & 0 \end{bmatrix}$$

where $P$ represents the electricity quantity exchange matrix of the region, $P_{i,j}$ represents a transferred electricity quantity from the $i^{th}$ sub-region to a $j^{th}$ sub-region, and $N$ represents the quantity of sub-regions under the jurisdiction of the region; and
the power-generation carbon emission information matrix of the region is expressed by a following calculation formula:

$$C = \begin{bmatrix} \sum_m E_{1,m}\varepsilon_m \\ \sum_m E_{2,m}\varepsilon_m \\ \vdots \\ \sum_m E_{i,m}\varepsilon_m \\ \vdots \\ \sum_m E_{N,m}\varepsilon_m \end{bmatrix}$$

where $C$ represents the power-generation carbon emission information matrix of the region, $E_{i,m}$ represents a generating capacity of an $m$th type of energy in the $i$th sub-region, and $\varepsilon_m$ represents a power-generation carbon emission factor corresponding to the generating capacity of the $m$th type of energy.

Preferably, the electricity carbon flow information matrix of the region is calculated according to a following calculation formula:

$$M = E - P + diag(P[1])$$

where $M$ represents the electricity carbon flow information matrix of the region, $E$ represents the power generation information matrix of the region, $P$ represents the electricity quantity exchange matrix of the region, $[1]$ represents a vector that contains only 1, $P[1]$ represents a vector obtained by multiplying the $P$ and the $[1]$, and $diag(P[1])$ represents an operation of placing the vector on a diagonal of a matrix, with a non-diagonal element being 0.

Preferably, after the calculating an electricity carbon emission factor matrix of each of the regions, the method further includes:
iteratively correcting the electricity carbon emission factor matrix between the regions pairwise by using a block-Jacobi iteration method based on a preset iteration termination threshold, until the iteration satisfies the iteration termination threshold, and obtaining an electricity carbon emission factor matrix of each of the regions after the iterative correction.

Based on a same inventive concept, the present disclosure further provides a distributed collaborative privacy calculation system for carbon emission in a plurality of power grids, including:

a matrix construction module configured to obtain a transferred electricity quantity between regions, obtain a generating capacity of a sub-region under jurisdiction of each of the regions, a transferred electricity quantity between sub-regions, and a generating capacity of energy of the sub-region, and construct an electricity quantity exchange matrix between the regions, and a power generation information matrix, an electricity quantity exchange matrix, and a power-generation carbon emission information matrix of each of the regions based on the obtained information;
a matrix calculation module configured to calculate a corresponding electricity carbon flow information matrix based on the power generation information matrix and the electricity quantity exchange matrix of each of the region; and
an electricity carbon emission factor calculation module configured to construct an electricity carbon emission balance equation based on the electricity carbon flow information matrix and the power-generation carbon emission information matrix of each of the regions, and the electricity quantity exchange matrix between the regions, and calculate an electricity carbon emission factor matrix of each of the regions, where the electricity carbon emission factor matrix of the region includes an electricity carbon emission factor of the sub-region under the jurisdiction of the region.

Preferably, the electricity carbon emission balance equation in the electricity carbon emission factor calculation module is expressed by a following calculation formula:

$$
\begin{bmatrix} M_1 & \cdots & P_{\tau 1} & \cdots & P_{L1} \\ \vdots & \ddots & \vdots & \cdots & \vdots \\ P_{1\tau} & \cdots & M_\tau & \cdots & P_{L\tau} \\ \vdots & \cdots & \vdots & \ddots & \vdots \\ P_{1L} & \cdots & P_{\tau L} & \cdots & M_L \end{bmatrix} \begin{bmatrix} \lambda_1 \\ \vdots \\ \lambda_\tau \\ \vdots \\ \lambda_L \end{bmatrix} = \begin{bmatrix} C_1 \\ \vdots \\ C_\tau \\ \vdots \\ C_L \end{bmatrix}
$$

where $M_\tau$ represents an electricity carbon flow information matrix of a $\tau^{\text{th}}$ region; $P_{\tau L}$ represents an electricity quantity exchange matrix from the $\tau^{\text{th}}$ region to an $L^{\text{th}}$ region; $P_{L\tau}$ represents an electricity quantity exchange matrix from the $L^{\text{th}}$ region to the $\tau^{\text{th}}$ region; $\lambda_\tau$ represents an electricity carbon emission factor matrix of the $\tau^{\text{th}}$ region; and $C_\tau$ represents a power-generation carbon emission information matrix of the $\tau^{\text{th}}$ region.

Preferably, the electricity carbon emission factor matrix in the electricity carbon emission factor calculation module is calculated according to a following calculation formula:

$$
\lambda_\tau = \lambda_\tau^{(0)} - \sum_\mu D_{\mu\tau} \lambda_\mu
$$

where

$$
\lambda_\tau^{(0)} = M_\tau^{-1} C_\tau
$$

$$
D_{\mu\tau} = M_\tau^{-1} P_{\mu\tau}
$$

where $\lambda_\tau$ represents the electricity carbon emission factor matrix of the $\tau^{\text{th}}$ region; $C_\tau$ represents the power-generation carbon emission information matrix of the $\tau^{\text{th}}$ region; $\lambda_\mu$ represents an electricity carbon emission factor matrix of a $\mu^{\text{th}}$ region; $P_{\mu\tau}$ represents an electricity quantity exchange matrix from the $\mu^{\text{th}}$ region to the $\tau^{\text{th}}$ region; $M_\tau$ represents the electricity carbon flow information matrix of the $\tau^{\text{th}}$ region; $D_{\mu\tau}$ represents an interactive power flow matrix between sub-regions from the $\mu^{\text{th}}$ region to the $\tau^{\text{th}}$ region; and $\lambda_\tau^{(0)}$ represents an initial iteration value of the electricity carbon emission factor matrix of the $\tau^{\text{th}}$ region.

Preferably, the power generation information matrix of the region in the matrix construction module is expressed by a following calculation formula:

$$
E = \begin{bmatrix} E_1 & 0 & \cdots & 0 & \cdots & 0 \\ 0 & E_2 & \cdots & 0 & \cdots & 0 \\ \vdots & \vdots & \ddots & \vdots & \cdots & \vdots \\ 0 & 0 & \cdots & E_i & \cdots & 0 \\ \vdots & \vdots & \vdots & \vdots & \ddots & \vdots \\ 0 & 0 & \cdots & 0 & \cdots & E_N \end{bmatrix}
$$

where $E$ represents the power generation information matrix of the region, $E_i$ represents a generating capacity of an $i^{\text{th}}$ sub-region under the jurisdiction of the region, and $N$ represents a quantity of sub-regions under the jurisdiction of the region;
the electricity quantity exchange matrix of the region in the matrix construction module is expressed by a following calculation formula:

$$
P = \begin{bmatrix} 0 & P_{2,1} & \cdots & P_{i,1} & \cdots & P_{N,1} \\ P_{1,2} & 0 & \cdots & P_{i,2} & \cdots & P_{N,2} \\ \vdots & \vdots & \ddots & \vdots & \cdots & \vdots \\ P_{1,j} & P_{2,j} & \cdots & 0 & \cdots & P_{N,j} \\ \vdots & \vdots & \vdots & \vdots & \ddots & \vdots \\ P_{1,N} & P_{2,N} & \cdots & P_{i,N} & \cdots & 0 \end{bmatrix}
$$

where $P$ represents the electricity quantity exchange matrix of the region, $P_{i,j}$ represents a transferred electricity quantity from the $i^{th}$ sub-region to a $j^{th}$ sub-region, and $N$ represents the quantity of sub-regions under the jurisdiction of the region; and

the power-generation carbon emission information matrix of the region in the matrix construction module is expressed by a following calculation formula:

$$C = \begin{bmatrix} \sum_m E_{1,m}\varepsilon_m \\ \sum_m E_{2,m}\varepsilon_m \\ \vdots \\ \sum_m E_{i,m}\varepsilon_m \\ \vdots \\ \sum_m E_{N,m}\varepsilon_m \end{bmatrix}$$

where $C$ represents the power-generation carbon emission information matrix of the region, $E_{i,m}$ represents a generating capacity of an $m^{th}$ type of energy in the $i^{th}$ sub-region, and $\varepsilon_m$ represents a power-generation carbon emission factor corresponding to the generating capacity of the $m^{th}$ type of energy.

Preferably, the electricity carbon flow information matrix of the region in the matrix calculation module is calculated according to a following calculation formula:

$$M = E - P + diag(P[1])$$

where $M$ represents the electricity carbon flow information matrix of the region, $E$ represents the power generation information matrix of the region, $P$ represents the electricity quantity exchange matrix of the region, $[1]$ represents a vector that contains only 1, $P[1]$ represents a vector obtained by multiplying the $P$ and the $[1]$, and $diag(P[1])$ represents an operation of placing the vector on a diagonal of a matrix, with a non-diagonal element being 0.

Preferably, after the electricity carbon emission factor calculation module calculates the electricity carbon emission factor matrix of each of the regions, the system further includes:

an iterative correction module configured to iteratively correct the electricity carbon emission factor matrix between the regions pairwise by using a block-Jacobi iteration method based on a preset iteration termination threshold, until the iteration satisfies the iteration termination threshold, and obtain an electricity carbon emission factor matrix of each of the regions after the iterative correction.

Based on a same inventive concept, the present disclosure further provides a computer device, including at least one processor, and a memory configured to store at least one program, where

the at least one program is executed by the at least one processor to implement the above distributed collaborative privacy calculation method for carbon emission in a plurality of power grids.

Based on a same inventive concept, the present disclosure further provides a computer-readable storage medium, where a computer program is stored on the computer-readable storage medium, and the computer program is executed to implement the above distributed collaborative privacy calculation method for carbon emission in a plurality of power grids.

Compared with the closest prior art, the present disclosure has the following beneficial effects:

The present disclosure provides a distributed collaborative privacy calculation method and system for carbon emission in a plurality of power grids. A transferred electricity quantity between regions is obtained, a generating capacity of a sub-region under jurisdiction of each region, a transferred electricity quantity between sub-regions, and a generating capacity of energy of the sub-region are obtained, and an electricity quantity exchange matrix between the regions, and a power generation information matrix, an electricity quantity exchange matrix, and a power-generation carbon emission information matrix of each region are constructed based on the obtained information. A corresponding electricity carbon flow information matrix is calculated based on the power generation information matrix and the electricity quantity exchange matrix of each region. An electricity carbon emission balance equation is constructed based on the electricity carbon flow information matrix and the power-generation carbon emission information matrix of each region, and the electricity quantity exchange matrix between the regions. An electricity carbon emission factor matrix of each region is calculated, where the electricity carbon emission factor matrix is constituted by an electricity carbon emission factor of the sub-region under the jurisdiction of the region. The present disclosure constructs the electricity carbon emission balance equation by using a matrix relationship based on the transferred electricity quantity between the regions and corresponding electricity carbon flow information and power-generation carbon emission information of each region, thereby calculating an electricity carbon emission factor of each sub-region under the jurisdiction of each region. This ensures confidentiality of data in each region while accurately calculating the electricity carbon emission factor of each sub-region.

## BRIEF DESCRIPTION OF THE DRAWINGS

FIG. 1 is a schematic flowchart of a distributed collaborative privacy calculation method for carbon emission in a plurality of power grids according to the present disclosure;

FIG. 2 is a schematic diagram showing communication connection between terminals in each region according to the present disclosure;

FIG. 3 is a schematic diagram of a calculation procedure of a distributed collaborative privacy calculation method for carbon emission in a plurality of power grids according to the present disclosure;

FIG. 4 is a schematic diagram of a software module by taking two regions A and B as an example according to the present disclosure; and

FIG. 5 is a schematic diagram of connection of a distributed collaborative privacy calculation system for carbon emission in a plurality of power grids according to the present disclosure.

## DETAILED DESCRIPTION

The specific implementations of the present disclosure will be further described in detail with reference to the accompanying drawings.

Embodiment 1:

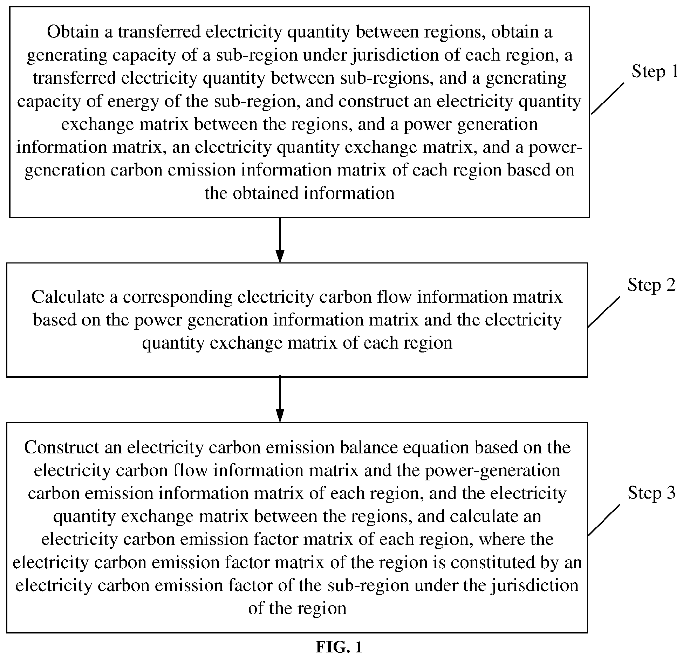

The present disclosure provides a distributed collaborative privacy calculation method for carbon emission in a plurality of power grids. As shown in FIG. 1, the method includes following steps:

Step 1: Obtain a transferred electricity quantity between regions, obtain a generating capacity of a sub-region under jurisdiction of each region, a transferred electricity quantity between sub-regions, and a generating capacity of energy of the sub-region, and construct an electricity quantity exchange matrix between the regions, and a power generation information matrix, an electricity quantity exchange matrix, and a power-generation carbon emission information matrix of each region based on the obtained information.

Step 2: Calculate a corresponding electricity carbon flow information matrix based on the power generation information matrix and the electricity quantity exchange matrix of each region.

Step 3: Construct an electricity carbon emission balance equation based on the electricity carbon flow information matrix and the power-generation carbon emission information matrix of each region, and the electricity quantity exchange matrix between the regions, and calculate an electricity carbon emission factor matrix of each region, where the electricity carbon emission factor matrix of the region is constituted by an electricity carbon emission factor of the sub-region under the jurisdiction of the region.

The method provided in the present disclosure combines scheduling information between a plurality of sub-regions under the jurisdiction of the regions and electricity quantity information received by each sub-region from the other party, performs transformation, and transmits transformed information to the other party to calculate an electricity carbon emission factor of a provincial power grid under the jurisdiction of the entire region. This speed is relatively high, and can ensure protect inter-provincial scheduling information, inter-provincial power generation information, and the like.

In the step 1 of the present disclosure, the power generation information matrix of the region is expressed by a following calculation formula:

$$E = \begin{bmatrix} E_1 & 0 & \cdots & 0 & \cdots & 0 \\ 0 & E_2 & \cdots & 0 & \cdots & 0 \\ \vdots & \vdots & \ddots & \vdots & \cdots & \vdots \\ 0 & 0 & \cdots & E_i & \cdots & 0 \\ \vdots & \vdots & \vdots & \vdots & \ddots & \vdots \\ 0 & 0 & \cdots & 0 & \cdots & E_N \end{bmatrix}$$

In the above formula, $E$ represents the power generation information matrix of the region, $E_i$ represents a generating capacity of an $i^{th}$ sub-region under the jurisdiction of the region, and $N$ represents a quantity of sub-regions under the jurisdiction of the region.

The electricity quantity exchange matrix of the region is expressed by a following calculation formula:

$$P = \begin{bmatrix} 0 & P_{2,1} & \cdots & P_{i,1} & \cdots & P_{N,1} \\ P_{1,2} & 0 & \cdots & P_{i,2} & \cdots & P_{N,2} \\ \vdots & \vdots & \ddots & \vdots & \cdots & \vdots \\ P_{1,j} & P_{2,j} & \cdots & 0 & \cdots & P_{N,j} \\ \vdots & \vdots & \vdots & \vdots & \ddots & \vdots \\ P_{1,N} & P_{2,N} & \cdots & P_{i,N} & \cdots & 0 \end{bmatrix}$$

In the above formula, $P$ represents the electricity quantity exchange matrix of the region, $P_{i,j}$ represents a transferred electricity quantity from the $i^{th}$ sub-region to a $j^{th}$ sub-region, and $N$ represents the quantity of sub-regions under the jurisdiction of the region.

The power-generation carbon emission information matrix of the region is expressed by a following calculation formula:

$$C = \begin{bmatrix} \sum_m E_{1,m}\varepsilon_m \\ \sum_m E_{2,m}\varepsilon_m \\ \vdots \\ \sum_m E_{i,m}\varepsilon_m \\ \vdots \\ \sum_m E_{N,m}\varepsilon_m \end{bmatrix}$$

In the above formula, $C$ represents the power-generation carbon emission information matrix of the region, $E_{i,m}$ represents a generating capacity of an $m^{th}$ type of energy in the $i^{th}$ sub-region, and $\varepsilon_m$ represents a power-generation carbon emission factor corresponding to the generating capacity of the $m^{th}$ type of energy.

Based on the above description, in the step 2, the electricity carbon flow information matrix of the region is calculated according to a following calculation formula:

$$M = E - P + diag(P[1])$$

In the above formula, $M$ represents the electricity carbon flow information matrix of the region, $E$ represents the power generation information matrix of the region, $P$ represents the electricity quantity exchange matrix of the region, **[1]** represents a vector that contains only 1, $P[1]$ represents a vector obtained by multiplying the $P$ and the **[1],** and $diag(P[1])$ represents an operation of placing the vector $P[1]$ on a diagonal of a matrix, with a non-diagonal element being 0.

In this case, as a basis of the step 3, an electricity carbon emission balance equation set is constructed:

$$M\lambda = C$$

A following equation is solved:

$$\lambda = M^{-1}C$$

In the above equation, $\lambda$ represents the electricity carbon emission factor matrix of the region.

Therefore, when inter-provincial power scheduling information of a power grid in each sub-region under the jurisdiction of each region is concentrated for operation, important respective data cannot be prevented from being disclosed. The step 3 of the present disclosure divides the above electricity carbon emission balance equation set into matrix blocks.

Therefore, in the step 3, the electricity carbon emission balance equation is expressed by a following calculation formula:

$$\begin{bmatrix} M_1 & \cdots & P_{\tau 1} & \cdots & P_{L1} \\ \vdots & \ddots & \vdots & \cdots & \vdots \\ P_{1\tau} & \cdots & M_\tau & \cdots & P_{L\tau} \\ \vdots & \cdots & \vdots & \ddots & \vdots \\ P_{1L} & \cdots & P_{\tau L} & \cdots & M_L \end{bmatrix} \begin{bmatrix} \lambda_1 \\ \vdots \\ \lambda_\tau \\ \vdots \\ \lambda_L \end{bmatrix} = \begin{bmatrix} C_1 \\ \vdots \\ C_\tau \\ \vdots \\ C_L \end{bmatrix}$$

In the above formula, $L$ represents a quantity of regions; $M_\tau$ represents an electricity carbon flow information matrix of a $\tau^{\text{th}}$ region; $P_{\tau L}$ represents an electricity quantity exchange matrix from the $\tau^{\text{th}}$ region to an $L^{\text{th}}$ region; $P_{L\tau}$ represents an electricity quantity exchange matrix from the $L^{\text{th}}$ region to the $\tau^{\text{th}}$ region; $\lambda_\tau$ represents an electricity carbon emission factor matrix of the $\tau^{\text{th}}$ region; and $C_\tau$ represents a power-generation carbon emission information matrix of the $\tau^{\text{th}}$ region.

The electricity carbon emission factor matrix is calculated according to a following calculation formula:

$$\lambda_\tau = \lambda_\tau^{(0)} - \sum_\mu D_{\mu\tau} \lambda_\mu$$

In the above formula,

$$\lambda_\tau^{(0)} = M_\tau^{-1} C_\tau$$

$$D_{\mu\tau} = M_\tau^{-1} P_{\mu\tau}$$

In the above formulas, $\lambda_\tau$ represents the electricity carbon emission factor matrix of the $\tau^{\text{th}}$ region; $C_\tau$ represents the power-generation carbon emission information matrix of the $\tau^{\text{th}}$ region; $\lambda_\mu$ represents an electricity carbon emission factor matrix of a $\mu^{\text{th}}$ region; $P_{\mu\tau}$ represents an electricity quantity exchange matrix from the $\mu^{\text{th}}$ region to the $\tau^{\text{th}}$ region; $M_\tau$ represents the electricity carbon flow information matrix of the $\tau^{\text{th}}$ region; $D_{\mu\tau}$ represents an interactive power flow matrix between sub-regions from the $\mu^{\text{th}}$ region to the $\tau^{\text{th}}$ region; and $\lambda_\tau^{(0)}$ represents an initial iteration value of the electricity carbon emission factor matrix of the $\tau^{\text{th}}$ region.

In addition, after the calculating an electricity carbon emission factor matrix of each of the regions, the method further includes:

iteratively correcting the electricity carbon emission factor matrix between the regions pairwise by using a block-Jacobi iteration method based on a preset iteration termination threshold, until the iteration satisfies the iteration termination threshold, and obtaining an electricity carbon emission factor matrix of each region after the iterative correction.

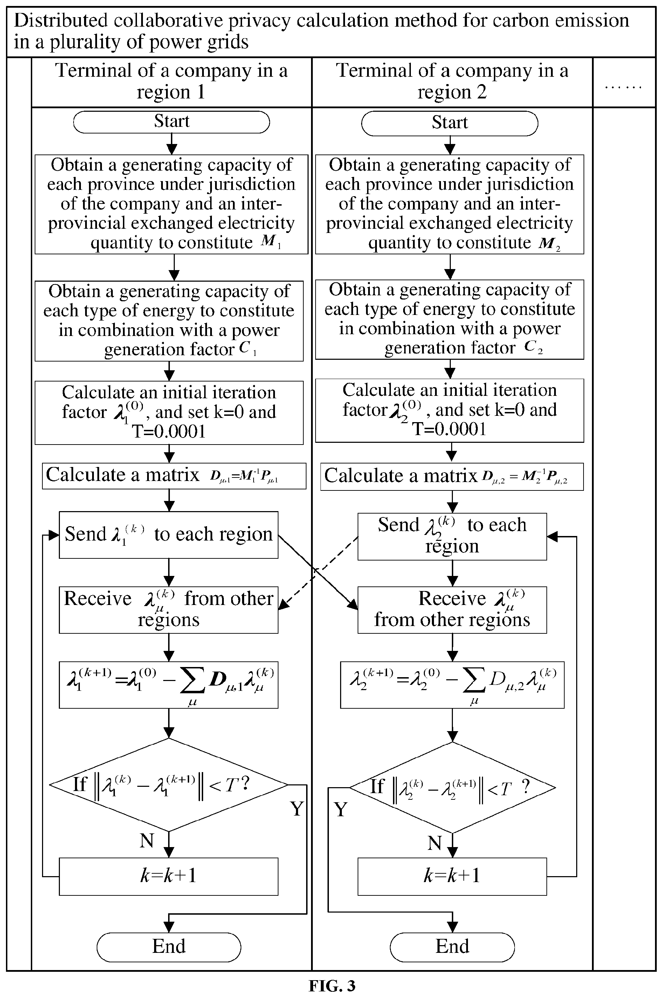

Referring to FIG. 3, the iteration is performed in a following manner:

(1) Set an initial iteration value to 0 (namely, $k = 0$) and an iteration termination threshold to 0.0001 (namely, $T = 0.0001$), where $\lambda_\tau^{(0)}$ represents a first iteration value.

(2) Each region sends $\lambda_\tau^{(k)}$ to other regions through interconnected terminals.

(3) Each region receives $\lambda_\mu^{(k)}$ from other regions and performs iterative calculation.

$$\lambda_\tau^{(k+1)} = \lambda_\tau^{(0)} - \sum_\mu D_{\mu\tau}\lambda_\mu^{(k)}$$

(4) Each region determines whether a following condition is met:

$$\left\| \lambda_\tau^{(k+1)} - \lambda_\tau^{(k)} \right\| < T$$

If the above condition is met, the iteration is terminated. If the above condition is not met, $k = k + 1$ is set and the step (2) is performed until the iteration is terminated.

This embodiment takes regions A, B, and C as an example to construct the electricity carbon emission balance equation:

$$\begin{bmatrix} M_a & P_{ba} & P_{ca} \\ P_{ab} & M_b & P_{cb} \\ P_{ac} & P_{bc} & M_c \end{bmatrix} \begin{bmatrix} \lambda_a \\ \lambda_b \\ \lambda_c \end{bmatrix} = \begin{bmatrix} C_a \\ C_b \\ C_c \end{bmatrix}$$

In the above equation, $M_a$ represents an electricity carbon flow information matrix of the region A, $M_b$ represents an electricity carbon flow information matrix of the region B, $M_c$ represents an electricity carbon flow information matrix of the region C, $P_{ba}$ represents an electricity quantity exchange matrix from the region B to the region A, $P_{ca}$ represents an electricity quantity exchange matrix from the region C to the region A, $P_{ab}$ represents an electricity quantity exchange matrix from the region A to the region B, $P_{cb}$ represents an electricity quantity exchange matrix from the region C to the region B, $P_{ac}$ represents an electricity quantity exchange matrix from the region A to the region C, $\lambda_a$ represents an electricity quantity carbon emission factor matrix of the region A, $\lambda_b$ represents an electricity carbon emission factor matrix of the region B, $\lambda_c$ represents an electricity carbon emission factor matrix of the region C, $C_a$ represents a power-generation carbon emission information matrix of the region A, $C_b$ represents a power-generation carbon emission information matrix of region B, and $C_c$ represents a power-generation carbon emission information matrix of the region C.

According to the above formula, the following are obtained:

$$M_a\lambda_a + P_{ba}\lambda_b + P_{ca}\lambda_c = C_a$$

$$M_b\lambda_b + P_{ab}\lambda_a + P_{cb}\lambda_c = C_b$$

$$M_c\lambda_c + P_{ac}\lambda_a + P_{bc}\lambda_b = C_c$$

Therefore,

$$\lambda_a = M_a^{-1}C_a - M_a^{-1}P_{ba}\lambda_b - M_a^{-1}P_{ca}\lambda_c$$

In other words,

$$\lambda_a = \lambda_a^{(0)} - D_{ba}\lambda_b - D_{ca}\lambda_c$$

Similarly, the following are obtained:

$$\lambda_b = \lambda_b^{(0)} - D_{ab}\lambda_a - D_{cb}\lambda_c$$

$$\lambda_c = \lambda_a^{(0)} - D_{ab}\lambda_b - D_{bc}\lambda_b$$

Afterwards, the block-Jacobi iteration method is used for iterative correction.

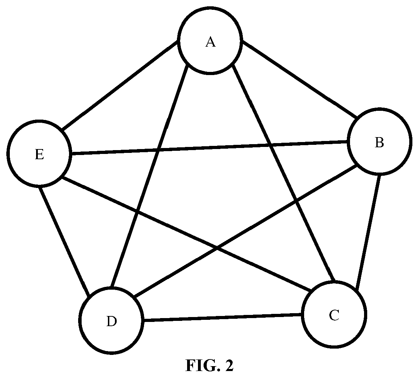

During iteration or data correction, terminals in the regions are fully connected, as shown in FIG. 2.

This method adopts a distributed layout. A power grid company responsible for each region establishes a terminal, and a Transmission Control Protocol (TCP)/an Internet Protocol (IP) is used for communication. The communication adopts a triple retransmission mechanism. Specifically, an instruction is resent if no feedback is received from the other party within 20 seconds after issuing the instruction, and it is considered that a link is interrupted or the other party goes offline if the instruction is sent more than three times. In a process from initiation of calculation to termination of the calculation in collaborative communication, communication steps are as follows:

1) A server of each terminal broadcasts "ready". If no feedback is received from one terminal, it is considered as unable to be ready.

2) The server of each terminal confirms that a ready state is available in 20s, and the terminal enters a "collaborative calculation" state, and sets its own iteration quantity k = 0.

3) After calculation, the server of each terminal sends $\lambda_\tau^{(k)}$ and $k_\tau$ to a server of another terminal, and the another terminal returns a response. If no feedback is received after the communication is performed three times, the server of the terminal stops iteration, and the terminal transitions to an "interrupted state".

4) The server of each terminal receives $\lambda_\mu^{(k)}$ and $k_\mu$ of the another terminal, and performs calculation. Assuming a local iteration quantity is $k_\tau$, if $k_\mu \neq k_\tau$, the server of the terminal changes the state to the "interrupted state". If $k_\mu = k_\tau$, $k_\tau$ of the server of the terminal increases by 1, namely, $k_\tau = k_\tau + 1$, and one iterative calculation is performed.

5) The server of each terminal sends information to confirm that the terminal is in the "collaborative calculation" state. If any terminal is in the "interrupted state", the server of each terminal changes its state to "ready" and restarts the step 1). If all terminals are in the "collaborative calculation" state, the step 3) is performed.

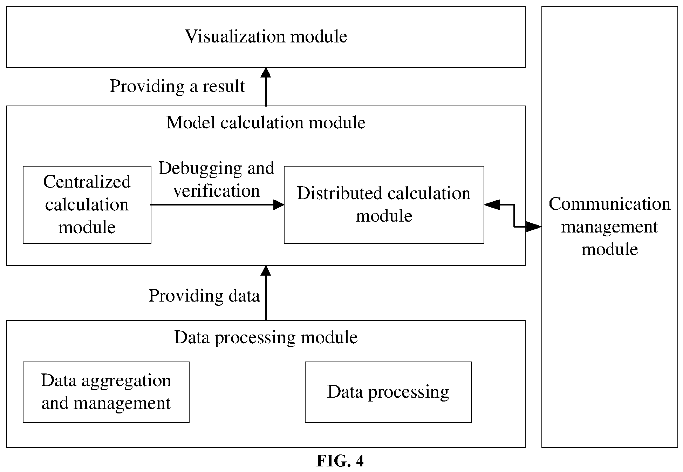

FIG. 3 is a schematic diagram of a calculation procedure by taking regions A and B as an example. The region A corresponds to a "terminal of a company in a region 1", and the region B corresponds to a "terminal of a company in a region 2". A schematic diagram of a corresponding software module is shown in FIG. 4. In FIG. 4, multi-terminal deployment is used, and data transmission is performed through the Internet. This method adopts distributed deployment.

A software instance includes following modules:

a data processing module: responsible for collecting, storing, and managing inter-provincial electricity exchange data, power generation data, and carbon emission data from a company's terminal managed by a power grid in the region A or B;

a model calculation module: responsible for running a model according to the above steps to perform calculation;

a communication management module: responsible for ensuring synchronous communication between both parties and smoothness of the link, and providing reliability assurance in case of a link failure; and

a visualization module: provides map display, large screen display, and other functions to display a settlement result.

In the embodiments of the present disclosure, the data processing module, the model calculation module, and the communication management module each may be one or more processors, controllers, or chips that each have a communication interface, can realize a communication protocol, and may further include a memory, a related interface and system transmission bus, and the like if necessary. The processor, controller, or chip executes program-related code to realize a corresponding function. In an alternative solution, the data processing module, the model calculation module, and the communication management module share an integrated chip or share devices such as a processor, a controller, and a memory. The shared processor, controller, or chip executes program-related code to implement a corresponding function.

In the present disclosure, taking China as an example, different power grid companies are responsible for power operation in different regions, namely State Grid Corporation of China, China Southern Power Grid Company, and Inner Mongolia Power (Group) Co., Ltd. (Mengxi Power Grid). They are responsible for power operation of various provinces in China. The sub-region in the present disclosure can calculate an electricity carbon emission factor of each province by taking the province as a standard.

The method provided in the present disclosure can hide scheduling information of a plurality of regions, and achieve multi-party collaborative calculation while ensuring accuracy of a calculation result, thereby solving a difficulty in managing data from both parties.

Embodiment 2:

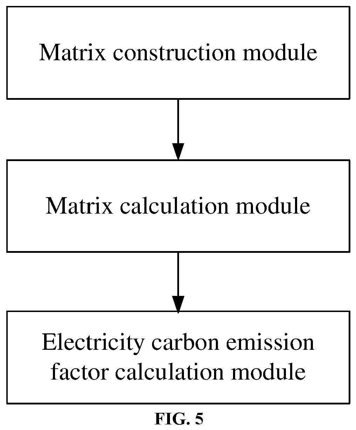

Based on a same inventive concept, the present disclosure provides a distributed collaborative privacy calculation system for carbon emission in a plurality of power grids. As shown in FIG. 5, the system includes a matrix construction module, a matrix calculation module, and an electricity carbon emission factor calculation module.

The matrix construction module is configured to obtain a transferred electricity quantity between regions, obtain a generating capacity of a sub-region under jurisdiction of each region, a transferred electricity quantity between sub-regions, and a generating capacity of energy of the sub-region, and construct an electricity quantity exchange matrix between the regions, and a power generation information matrix, an electricity quantity exchange matrix, and a power-generation carbon emission information matrix of each region based on the obtained information.

The matrix calculation module is configured to calculate a corresponding electricity carbon flow information matrix based on the power generation information matrix and the electricity quantity exchange matrix of each region.

The electricity carbon emission factor calculation module is configured to construct an electricity carbon emission balance equation based on the electricity carbon flow information matrix and the power-generation carbon emission information matrix of each region, and the electricity quantity exchange matrix between the regions, and calculate an electricity carbon emission factor matrix of each region, where the electricity carbon emission factor matrix of the region includes an electricity carbon emission factor of the sub-region under the jurisdiction of the region.

The electricity carbon emission balance equation in the electricity carbon emission factor calculation module is expressed by a following calculation formula:

$$\begin{bmatrix} M_1 & \cdots & P_{\tau 1} & \cdots & P_{L1} \\ \vdots & \ddots & \vdots & \cdots & \vdots \\ P_{1\tau} & \cdots & M_\tau & \cdots & P_{L\tau} \\ \vdots & \cdots & \vdots & \ddots & \vdots \\ P_{1L} & \cdots & P_{\tau L} & \cdots & M_L \end{bmatrix} \begin{bmatrix} \lambda_1 \\ \vdots \\ \lambda_\tau \\ \vdots \\ \lambda_L \end{bmatrix} = \begin{bmatrix} C_1 \\ \vdots \\ C_\tau \\ \vdots \\ C_L \end{bmatrix}$$

In the above formula, $M_\tau$ represents an electricity carbon flow information matrix of a $\tau^{th}$ region; $P_{\tau L}$ represents an electricity quantity exchange matrix from the $\tau^{th}$ region to an $L^{th}$ region; $\lambda_\tau$ represents an electricity carbon emission factor matrix of the $\tau^{th}$ region; and $C_\tau$ represents a power-generation carbon emission information matrix of the $\tau^{th}$ region.

The electricity carbon emission factor matrix in the electricity carbon emission factor calculation module is calculated according to a following calculation formula:

$$\lambda_\tau = \lambda_\tau^{(0)} - \sum_\mu D_{\mu\tau} \lambda_\mu$$

In the above formula,

$$\lambda_\tau^{(0)} = M_\tau^{-1} C_\tau$$

$$D_{\mu\tau} = M_\tau^{-1} P_{\mu\tau}$$

In the above formulas, $\lambda_\tau$ represents the electricity carbon emission factor matrix of the $\tau^{th}$ region; $C_\tau$ represents the power-generation carbon emission information matrix of the $\tau^{th}$ region; $\lambda_\mu$ represents an electricity carbon emission factor matrix of a $\mu^{th}$ region; $P_{\mu\tau}$ represents an electricity quantity exchange matrix from the $\mu^{th}$ region to the $\tau^{th}$ region; $M_\tau$ represents the electricity carbon flow information matrix of the $\tau^{th}$ region; $D_{\mu\tau}$ represents an interactive power flow matrix between sub-regions from the $\mu^{th}$ region to the $\tau^{th}$ region; and $\lambda_\tau^{(0)}$ represents an initial iteration value of the electricity carbon emission factor matrix of the $\tau^{th}$ region.

The power generation information matrix of the region in the matrix construction module is expressed by a following calculation formula:

$$E = \begin{bmatrix} E_1 & 0 & \cdots & 0 & \cdots & 0 \\ 0 & E_2 & \cdots & 0 & \cdots & 0 \\ \vdots & \vdots & \ddots & \vdots & \cdots & \vdots \\ 0 & 0 & \cdots & E_i & \cdots & 0 \\ \vdots & \vdots & \vdots & \vdots & \ddots & \vdots \\ 0 & 0 & \cdots & 0 & \cdots & E_N \end{bmatrix}$$

In the above formula, $E$ represents the power generation information matrix of the region, $E_i$ represents a generating capacity of an $i^{th}$ sub-region under the jurisdiction of the region, and $N$ represents a quantity of sub-regions under the jurisdiction of the region.

The electricity quantity exchange matrix of the region in the matrix construction module is expressed by a following calculation formula:

$$P = \begin{bmatrix} 0 & P_{2,1} & \cdots & P_{i,1} & \cdots & P_{N,1} \\ P_{1,2} & 0 & \cdots & P_{i,2} & \cdots & P_{N,2} \\ \vdots & \vdots & \ddots & \vdots & \cdots & \vdots \\ P_{1,j} & P_{2,j} & \cdots & 0 & \cdots & P_{N,j} \\ \vdots & \vdots & \vdots & \vdots & \ddots & \vdots \\ P_{1,N} & P_{2,N} & \cdots & P_{i,N} & \cdots & 0 \end{bmatrix}$$

In the above formula, $P$ represents the electricity quantity exchange matrix of the region, $P_{i,j}$ represents a transferred electricity quantity from the $i^{th}$ sub-region to a $j^{th}$ sub-region, and $N$ represents the quantity of sub-regions under the jurisdiction of the region.

The power-generation carbon emission information matrix of the region in the matrix construction module is expressed by a following calculation formula:

$$C = \begin{bmatrix} \sum_m E_{1,m}\varepsilon_m \\ \sum_m E_{2,m}\varepsilon_m \\ \vdots \\ \sum_m E_{i,m}\varepsilon_m \\ \vdots \\ \sum_m E_{N,m}\varepsilon_m \end{bmatrix}$$

In the above formula, C represents the power-generation carbon emission information matrix of the region, $E_{i,m}$ represents a generating capacity of an $m^{th}$ type of energy in the $i^{th}$ sub-region, and $\varepsilon_m$ represents a power-generation carbon emission factor corresponding to the generating capacity of the $m^{th}$ type of energy.

The electricity carbon flow information matrix of the region in the matrix calculation module is calculated according to a following calculation formula:

$$M = E - P + diag(P[1])$$

In the above formula, $M$ represents the electricity carbon flow information matrix of the region, $E$ represents the power generation information matrix of the region, $P$ represents the electricity quantity exchange matrix of the region, **[1]** represents a vector that contains only 1, $P[1]$ represents a vector obtained by multiplying the $P$ and the **[1]**, and $diag(P[1])$ represents an operation of placing the vector on a diagonal of a matrix, with a non-diagonal element being 0.

In the present disclosure, after the electricity carbon emission factor calculation module calculates the electricity carbon emission factor matrix of each region, the system further includes:

an iterative correction module configured to iteratively correct the electricity carbon emission factor matrix between the regions pairwise by using a block-Jacobi iteration method based on a preset iteration termination threshold, until the iteration satisfies the iteration termination threshold, and obtain an electricity carbon emission factor matrix of each region after the iterative correction.

In the embodiments of the present disclosure, the matrix construction module, the matrix calculation module, the electricity carbon emission factor calculation module, and the iterative correction module each may be one or more processors, controllers, or chips that each have a communication interface, can realize a communication protocol, and may further include a memory, a related interface and system transmission bus, and the like if necessary. The processor, controller, or chip executes program-related code to realize a corresponding function. In an alternative solution, the matrix construction module, the matrix calculation module, the electricity carbon emission factor calculation module, and the iterative correction module share an integrated chip or share devices such as a processor, a controller, and a memory. The shared processor, controller, or chip executes program-related code to implement a corresponding function.

Embodiment 3:

Based on a same inventive concept, the present disclosure further provides a computer device. The computer device includes a processor and a memory. The memory is configured to store a computer program that includes a program instruction, and the processor is configured to execute the program instruction stored in the memory. The processor may be a central processing unit (CPU), and may also be another general-purpose processor, a digital signal processor (DSP), an application specific integrated circuit (ASIC), a field-programmable gate array (FPGA) or another programmable logic device, a discrete gate, a transistor logic device, a discrete hardware component, or the like. As a calculation core and a control core of the computer device, the processor is suitable for implementing at least one instruction, specifically suitable for loading and executing at least one instruction in the computer storage medium to achieve corresponding methods, procedures, or functions, in order to achieve the steps of the distributed collaborative privacy calculation method for carbon emission in a plurality of power grids in the above embodiments.

Embodiment 4:

Based on a same inventive concept, the present disclosure further provides a storage medium, specifically a computer-readable storage medium (memory). The computer-readable storage medium is a memory device in a computer device for storing programs and data. It can be understood that the computer-readable storage medium herein may include a built-in storage medium in the computer device, and certainly may also include an extended storage medium supported by the computer device. The computer-readable storage medium provides storage space that stores an operating system of the computer device. Moreover, the storage space also stores at least one instruction suitable for being loaded and executed by a processor. The at least one instruction may be at least one computer program (including program code). It should be noted that the computer-readable storage medium herein may be a high-speed random access memory (RAM) or a non-volatile memory, such as at least one disk memory. The at least one instruction stored in the computer-readable storage medium can be loaded and executed by the processor to implement the steps of the distributed collaborative privacy calculation method for carbon emission in a plurality of power grids in the above embodiments.

A person skilled in the art should understand that the embodiments in the present disclosure may be provided as a method, a system, or a computer program product. Therefore, the present disclosure may use a form of hardware only embodiments, software only embodiments, or embodiments with a combination of software and hardware. Moreover, the present disclosure may use a form of a computer program product that is implemented on at least one computer-usable storage medium (including but not limited to a magnetic disk memory, a CD-ROM, an optical memory, and the like) that include computer-usable program code.

The present disclosure is described with reference to the flowcharts and/or block diagrams of the method, the device (system), and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, such that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can instruct a computer or another programmable data processing device to work in a specific manner, such that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, such that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Finally, it should be noted that the above embodiments are merely intended to describe the technical solutions of the present disclosure, rather than to limit the protection scope of the present disclosure. Although the present disclosure is described in detail with reference to the above embodiments, it is to be appreciated by a person of ordinary skill in the art that changes, modifications, or equivalent substitutions may still be made to the specific implementations of the present disclosure, and these changes, modifications, or equivalent substitutions shall fall within the protection scope of the claims of the present disclosure.

**Claims**

1.  A distributed collaborative privacy calculation method for carbon emission in a plurality of power grids, comprising:

    obtaining a transferred electricity quantity between regions, obtaining a generating capacity of a sub-region under jurisdiction of each of the regions, a transferred electricity quantity between sub-regions, and a generating capacity of energy of the sub-region, and constructing an electricity quantity exchange matrix between the regions, and a power generation information matrix, an electricity quantity exchange matrix, and a power-generation carbon emission information matrix of each of the regions based on the obtained information;
    calculating a corresponding electricity carbon flow information matrix based on the power generation information matrix and the electricity quantity exchange matrix of each of the regions; and
    constructing an electricity carbon emission balance equation based on the electricity carbon flow information matrix and the power-generation carbon emission information matrix of each of the regions, and the electricity quantity exchange matrix between the regions, and calculating an electricity carbon emission factor matrix of each of the regions, wherein the electricity carbon emission factor matrix of the region comprises an electricity carbon emission factor of the sub-region under the jurisdiction of the region.

2.  The method according to claim 1, wherein the electricity carbon emission balance equation is expressed by a following calculation formula:

$$\begin{bmatrix} M_1 & \cdots & P_{\tau 1} & \cdots & P_{L1} \\ \vdots & \ddots & \vdots & \cdots & \vdots \\ P_{1\tau} & \cdots & M_\tau & \cdots & P_{L\tau} \\ \vdots & \cdots & \vdots & \ddots & \vdots \\ P_{1L} & \cdots & P_{\tau L} & \cdots & M_L \end{bmatrix} \begin{bmatrix} \lambda_1 \\ \vdots \\ \lambda_\tau \\ \vdots \\ \lambda_L \end{bmatrix} = \begin{bmatrix} C_1 \\ \vdots \\ C_\tau \\ \vdots \\ C_L \end{bmatrix}$$

    wherein $M_\tau$ represents an electricity carbon flow information matrix of a $\tau^{\text{th}}$ region; $P_{\tau L}$ represents an electricity quantity exchange matrix from the $\tau^{\text{th}}$ region to an $L^{\text{th}}$ region; $P_{L\tau}$ represents an electricity quantity exchange matrix from the $L^{\text{th}}$ region to the $\tau^{\text{th}}$ region; $\lambda_\tau$ represents an electricity carbon emission factor matrix of the $\tau^{\text{th}}$ region; and $C_\tau$ represents a power-generation carbon emission information matrix of the $\tau^{\text{th}}$ region.

3.  The method according to claim 2, wherein the electricity carbon emission factor matrix is calculated according to a following calculation formula:

$$\lambda_\tau = \lambda_\tau^{(0)} - \sum_\mu D_{\mu\tau}\lambda_\mu$$

    wherein

$$\lambda_\tau^{(0)} = M_\tau^{-1} C_\tau$$

$$D_{\mu\tau} = M_\tau^{-1} P_{\mu\tau}$$

wherein $\lambda_\tau$ represents the electricity carbon emission factor matrix of the $\tau^{\text{th}}$ region; $C_\tau$ represents the power-generation carbon emission information matrix of the $\tau^{\text{th}}$ region; $\lambda_\mu$ represents an electricity carbon emission factor matrix of a $\mu^{\text{th}}$ region; $P_{\mu\tau}$ represents an electricity quantity exchange matrix from the $\mu^{\text{th}}$ region to the $\tau^{\text{th}}$ region; $M_\tau$ represents the electricity carbon flow information matrix of the $\tau^{\text{th}}$ region; $D_{\mu\tau}$ represents an interactive power flow matrix between sub-regions from the $\mu^{\text{th}}$ region to the $\tau^{\text{th}}$ region; and $\lambda_\tau^{(0)}$ represents an initial iteration value of the electricity carbon emission factor matrix of the $\tau^{\text{th}}$ region.

4. The method according to claim 1, wherein the power generation information matrix of the region is expressed by a following calculation formula:

$$E = \begin{bmatrix} E_1 & 0 & \cdots & 0 & \cdots & 0 \\ 0 & E_2 & \cdots & 0 & \cdots & 0 \\ \vdots & \vdots & \ddots & \vdots & \cdots & \vdots \\ 0 & 0 & \cdots & E_i & \cdots & 0 \\ \vdots & \vdots & \vdots & \vdots & \ddots & \vdots \\ 0 & 0 & \cdots & 0 & \cdots & E_N \end{bmatrix}$$

wherein $E$ represents the power generation information matrix of the region, $E_i$ represents a generating capacity of an $i^{\text{th}}$ sub-region under the jurisdiction of the region, and $N$ represents a quantity of sub-regions under the jurisdiction of the region;
the electricity quantity exchange matrix of the region is expressed by a following calculation formula:

$$P = \begin{bmatrix} 0 & P_{2,1} & \cdots & P_{i,1} & \cdots & P_{N,1} \\ P_{1,2} & 0 & \cdots & P_{i,2} & \cdots & P_{N,2} \\ \vdots & \vdots & \ddots & \vdots & \cdots & \vdots \\ P_{1,j} & P_{2,j} & \cdots & 0 & \cdots & P_{N,j} \\ \vdots & \vdots & \vdots & \vdots & \ddots & \vdots \\ P_{1,N} & P_{2,N} & \cdots & P_{i,N} & \cdots & 0 \end{bmatrix}$$

wherein $P$ represents the electricity quantity exchange matrix of the region, $P_{i,j}$ represents a transferred electricity quantity from the $i^{\text{th}}$ sub-region to a $j^{\text{th}}$ sub-region, and $N$ represents the quantity of sub-regions under the jurisdiction of the region; and
the power-generation carbon emission information matrix of the region is expressed by a following calculation formula:

17

$$C = \begin{bmatrix} \sum_m E_{1,m}\varepsilon_m \\ \sum_m E_{2,m}\varepsilon_m \\ \vdots \\ \sum_m E_{i,m}\varepsilon_m \\ \vdots \\ \sum_m E_{N,m}\varepsilon_m \end{bmatrix}$$

wherein $C$ represents the power-generation carbon emission information matrix of the region, $E_{i,m}$ represents a generating capacity of an $m$th type of energy in the $i$th sub-region, and $\varepsilon_m$ represents a power-generation carbon emission factor corresponding to the generating capacity of the $m$th type of energy.

5. The method according to claim 4, wherein the electricity carbon flow information matrix of the region is calculated according to a following calculation formula:

$$M = E - P + diag(P[1])$$

wherein $M$ represents the electricity carbon flow information matrix of the region, $E$ represents the power generation information matrix of the region, $P$ represents the electricity quantity exchange matrix of the region, $[1]$ represents a vector that contains only 1, $P[1]$ represents a vector obtained by multiplying the $P$ and the $[1]$, and $diag(P[1])$ represents an operation of placing the vector on a diagonal of a matrix, with a non-diagonal element being 0.

6. The method according to claim 1, after the calculating an electricity carbon emission factor matrix of each of the regions, further comprising:
iteratively correcting the electricity carbon emission factor matrix between the regions pairwise by using a block-Jacobi iteration method based on a preset iteration termination threshold, until the iteration satisfies the iteration termination threshold, and obtaining an electricity carbon emission factor matrix of each of the regions after the iterative correction.

7. A distributed collaborative privacy calculation system for carbon emission in a plurality of power grids, comprising:

a matrix construction module configured to obtain a transferred electricity quantity between regions, obtain a generating capacity of a sub-region under jurisdiction of each of the regions, a transferred electricity quantity between sub-regions, and a generating capacity of energy of the sub-region, and construct an electricity quantity exchange matrix between the regions, and a power generation information matrix, an electricity quantity exchange matrix, and a power-generation carbon emission information matrix of each of the regions based on the obtained information;
a matrix calculation module configured to calculate a corresponding electricity carbon flow information matrix based on the power generation information matrix and the electricity quantity exchange matrix of each of the regions; and
an electricity carbon emission factor calculation module configured to construct an electricity carbon emission balance equation based on the electricity carbon flow information matrix and the power-generation carbon emission information matrix of each of the regions, and the electricity quantity exchange matrix between the regions, and calculate an electricity carbon emission factor matrix of each of the regions, wherein the electricity carbon emission factor matrix of the region comprises an electricity carbon emission factor of the sub-region under the jurisdiction of the region.

8. The system according to claim 7, wherein after the electricity carbon emission factor calculation module calculates the electricity carbon emission factor matrix of each of the regions, the system further comprises:
an iterative correction module configured to iteratively correct the electricity carbon emission factor matrix between the regions pairwise by using a block-Jacobi iteration method based on a preset iteration termination threshold, until the iteration satisfies the iteration termination threshold, and obtain an electricity carbon emission factor matrix of each of the regions after the iterative correction.

9. A computer device, comprising at least one processor, and a memory configured to store at least one program, wherein
the at least one program is executed by the at least one processor to implement the distributed collaborative privacy calculation method for carbon emission in a plurality of power grids according to any one of claims 1 to 6.

10. A computer-readable storage medium, wherein a computer program is stored on the computer-readable storage medium, and the computer program is executed to implement the distributed collaborative privacy calculation method for carbon emission in a plurality of power grids according to any one of claims 1 to 6.

**Patentansprüche**

1. Ein verteiltes kollaboratives Privatsphäre-Berechnungsverfahren für Kohlenstoffemissionen in einer Mehrzahl von Stromnetzen, umfassend:

Erhalten einer übertragenen Elektrizitätsmenge zwischen Regionen, Erhalten einer Erzeugungskapazität einer Unterregion unter der Zuständigkeit jeder der Regionen, einer übertragenen Elektrizitätsmenge zwischen Unterregionen und einer Energieerzeugungskapazität der Unterregion, und Aufbauen einer Elektrizitätsmengenaustauschmatrix zwischen den Regionen, einer Stromerzeugungsinformationsmatrix, einer Elektrizitätsmengenaustauschmatrix und einer Stromerzeugungskohlenstoffemissionsinformationsmatrix von jeder der Regionen basierend auf den erhaltenen Informationen;
Berechnen einer entsprechenden Elektrizitätskohlenstofffluss-Informationsmatrix basierend auf der Stromerzeugungsinformationsmatrix und der Elektrizitätsmengenaustauschmatrix von jeder der Regionen; und
Aufbauen einer Elektrizitätskohlenstoffemissionssaldengleichung basierend auf der Elektrizitätskohlenstofffluss-Informationsmatrix und der Stromerzeugungskohlenstoffemissionsinformationsmatrix von jeder der Regionen, und der Elektrizitätsmengenaustauschmatrix zwischen den Regionen, und Berechnen einer Elektrizitätskohlenstoffemissionsfaktormatrix von jeder der Regionen, wobei die Elektrizitätskohlenstoffemissionsfaktormatrix der Region einen Elektrizitätskohlenstoffemissionsfaktor der Unterregion unter der Zuständigkeit der Region umfasst.

2. Verfahren nach Anspruch 1, wobei die Elektrizitätskohlenstoffemissionssaldengleichung durch eine nachfolgende Berechnungsformel ausgedrückt wird:

$$\begin{bmatrix} M_1 & \cdots & P_{\tau 1} & \cdots & P_{L1} \\ \vdots & \ddots & \vdots & \cdots & \vdots \\ P_{1\tau} & \cdots & M_\tau & \cdots & P_{L\tau} \\ \vdots & \cdots & \vdots & \ddots & \vdots \\ P_{1L} & \cdots & P_{\tau L} & \cdots & M_L \end{bmatrix} \begin{bmatrix} \lambda_1 \\ \vdots \\ \lambda_\tau \\ \vdots \\ \lambda_L \end{bmatrix} = \begin{bmatrix} C_1 \\ \vdots \\ C_\tau \\ \vdots \\ C_L \end{bmatrix}$$

wobei $M_\tau$ eine Elektrizitätskohlenstofffluss-Informationsmatrix einer $\tau^{\text{th}}$ Region darstellt; $P_{\tau L}$ eine Elektrizitätsmengenaustauschmatrix von der $\tau^{\text{th}}$ Region zu einer $L^{\text{th}}$ Region darstellt; $P_{L\tau}$ eine Elektrizitätsmengenaustauschmatrix von der $L^{\text{th}}$ Region zu der $\tau^{\text{th}}$ Region darstellt; $\lambda_\tau$ eine Elektrizitätskohlenstoffemissionsfaktormatrix der $\tau^{\text{th}}$ Region darstellt; und $C_\tau$ eine Stromerzeugungskohlenstoffemissionsinformationsmatrix der $\tau^{\text{th}}$ Region darstellt.

3. Verfahren nach Anspruch 2, wobei die Elektrizitätskohlenstoffemissionsfaktormatrix gemäß einer nachfolgenden Berechnungsformel berechnet wird:

$$\lambda_\tau = \lambda_\tau^{(0)} - \sum_\mu D_{\mu\tau} \lambda_\mu$$

wobei

$$\lambda_\tau^{(0)} = M_\tau^{-1} C_\tau$$

$$D_{\mu\tau} = M_\tau^{-1} P_{\mu\tau}$$

wobei $\lambda_\tau$ die Elektrizitätskohlenstoffemissionsfaktormatrix der $\tau^{\text{th}}$ Region darstellt; $C_\tau$ die Stromerzeugungskohlenstoffemissionsinformationsmatrix der $\tau^{\text{th}}$ Region darstellt; $\lambda_\mu$ eine Elektrizitätskohlenstoffemissionsfaktormatrix einer $\mu^{\text{th}}$ Region darstellt; $P_{\mu\tau}$ eine Elektrizitätsmengenaustauschmatrix von der $\mu^{\text{th}}$ Region zu der $\tau^{\text{th}}$ Region darstellt; $M_\tau$ die Elektrizitätskohlenstofffluss-Informationsmatrix der $\tau^{\text{th}}$ Region darstellt; $D_{\mu\tau}$ eine interaktive Stromflussmatrix zwischen Unterregionen von der $\mu^{\text{th}}$ Region zu der $\tau^{\text{th}}$ Region darstellt; und $\lambda_\tau^{(0)}$ einen Anfangsiterationswert der Elektrizitätskohlenstoffemissionsfaktormatrix der $\tau^{\text{th}}$ Region darstellt.

4. Verfahren nach Anspruch 1, wobei

die Stromerzeugungsinformationsmatrix der Region durch folgende Berechnungsformel ausgedrückt ist:

$$E = \begin{bmatrix} E_1 & 0 & \cdots & 0 & \cdots & 0 \\ 0 & E_2 & \cdots & 0 & \cdots & 0 \\ \vdots & \vdots & \ddots & \vdots & \cdots & \vdots \\ 0 & 0 & \cdots & E_i & \cdots & 0 \\ \vdots & \vdots & \vdots & \vdots & \ddots & \vdots \\ 0 & 0 & \cdots & 0 & \cdots & E_N \end{bmatrix}$$

wobei $E$ die Stromerzeugungsinformationsmatrix der Region darstellt, $E_i$ eine Erzeugungskapazität einer $i^{\text{th}}$ Unterregion unter der Zuständigkeit der Region darstellt und N eine Anzahl von Unterregionen unter der Zuständigkeit der Region darstellt;
die Elektrizitätsmengenaustauschmatrix der Region durch eine nachfolgende Berechnungsformel ausgedrückt wird:

$$P = \begin{bmatrix} 0 & P_{2,1} & \cdots & P_{i,1} & \cdots & P_{N,1} \\ P_{1,2} & 0 & \cdots & P_{i,2} & \cdots & P_{N,2} \\ \vdots & \vdots & \ddots & \vdots & \cdots & \vdots \\ P_{1,j} & P_{2,j} & \cdots & 0 & \cdots & P_{N,j} \\ \vdots & \vdots & \vdots & \vdots & \ddots & \vdots \\ P_{1,N} & P_{2,N} & \cdots & P_{i,N} & \cdots & 0 \end{bmatrix}$$

wobei P die Elektrizitätsmengenaustauschmatrix der Region darstellt, $P_{i,j}$ eine übertragene Elektrizitätsmenge von der $i^{\text{th}}$ Unterregion zu einer $j^{\text{th}}$ Unterregion darstellt, und N die Anzahl der Unterregionen unter der Zuständigkeit der Region darstellt; und
die Stromerzeugungskohlenstoffemissionsinformationsmatrix der Region durch eine nachfolgende Berechnungsformel ausgedrückt wird:

$$C = \begin{bmatrix} \sum_m E_{1,m}\varepsilon_m \\ \sum_m E_{2,m}\varepsilon_m \\ \vdots \\ \sum_m E_{i,m}\varepsilon_m \\ \vdots \\ \sum_m E_{N,m}\varepsilon_m \end{bmatrix}$$

wobei $C$ die Stromerzeugungskohlenstoffemissionsinformationsmatrix der Region darstellt, $E_{i,m}$ eine Erzeugungskapazität einer $m$th Energieart in der $i$th Unterregion darstellt und $\varepsilon_m$ einen Stromerzeugungskohlenstoffemissionsfaktor entsprechend der Erzeugungskapazität der $m$th Energieart darstellt.

5. Verfahren nach Anspruch 4, wobei die Elektrizitätskohlenstofffluss-Informationsmatrix der Region gemäß einer nachfolgenden Berechnungsformel berechnet ist:

$$M = E - P + diag(P[1])$$

wobei $M$ die Elektrizitätskohlenstofffluss-Informationsmatrix der Region darstellt, $E$ die Stromerzeugungsinformationsmatrix der Region darstellt, $P$ die Elektrizitätsmengenaustauschmatrix der Region darstellt, $[1]$ einen Vektor bezeichnet, der nur 1 enthält, $P[1]$ einen durch Multiplikation von $P$ und $[1]$ erhaltenen Vektor darstellt und $diag(P[1])$ einen Vorgang darstellt, bei dem dieser Vektor auf eine Diagonale einer Matrix platziert wird, miteinen Nicht-Diagonalelement von 0.

6. Verfahren nach Anspruch 1, wobei das Verfahren nach dem Berechnen einer Elektrizitätskohlenstoffemissionsfaktormatrix von jeder der Regionen ferner umfasst: Iteratives Korrigieren der Elektrizitätskohlenstoffemissionsfaktormatrix zwischen den Regionen paarweise unter Verwendung eines Block-Jacobi-Iterationsverfahrens basierend auf einem vorgegebenen Iterationsabbruchschwellenwert, bis die Iteration den Iterationsabbruchschwellenwert erfüllt, und Erhalten einer Elektrizitätskohlenstoffemissionsfaktormatrix von jeder der Regionen nach der iterativen Korrektur.

7. Ein verteiltes kollaboratives Privatsphäre-Berechnungssystem für Kohlenstoffemissionen in einer Mehrzahl von Stromnetzen, umfassend:

ein Matrixaufbaumodul, das konfiguriert ist, um eine übertragene Elektrizitätsmenge zwischen Regionen zu erhalten, eine Erzeugungskapazität einer Unterregion unter der Zuständigkeit von jeder der Regionen, eine übertragene Elektrizitätsmenge zwischen Unterregionen und eine Energieerzeugungskapazität der Unterregion zu erhalten, und eine Elektrizitätsmengenaustauschmatrix zwischen den Regionen und eine Stromerzeugungsinformationsmatrix, eine Elektrizitätsmengenaustauschmatrix und eine Stromerzeugungskohlenstoffemission sinformationsmatrix von jeder der Regionen basierend auf den erhaltenen Informationen aufzubauen;
ein Matrixberechnungsmodul, das konfiguriert ist, um eine korrespondierende Elektrizitätskohlenstofffluss-Informationsmatrix basierend auf der Stromerzeugungsinformationsmatrix und der Elektrizitätsmengenaustauschmatrix von jeder der Regionen zu berechnen; und ein Elektrizitätskohlenstoffemissionsfaktor-Berechnungsmodul, das konfiguriert ist, um eine Elektrizitätskohlenstoffemissionssaldengleichung basierend auf der Elektrizitätskohlenstofffluss-Informationsmatrix und der Stromerzeugungskohlenstoffemissionsinformationsmatrix von jeder der Regionen, und der Elektrizitätsmengenaustauschmatrix zwischen den Regionen aufzubauen, und eine Elektrizitätskohlenstoffemissionsfaktormatrix von jeder der Regionen zu berechnen, wobei die Elektrizitätskohlenstoffemissionsfaktormatrix der Region einen Elektrizitätskohlenstoffemissionsfaktor der Unterregion unter der Zuständigkeit der Region umfasst.

8. System nach Anspruch 7, wobei das System nach dem Berechnen der Elektrizitätskohlenstoffemissionsfaktormatrix von jeder der Regionen durch das Elektrizitätskohlenstoffemissionsfaktor-Berechnungsmodul ferner umfasst:

ein iteratives Korrekturmodul, das konfiguriert ist, die Elektrizitätskohlenstoffemissionsfaktormatrix zwischen den Regionen paarweise unter Verwendung eines Block-Jacobi-Iterationsverfahrens basierend auf einem vorgegebenen Iterationsabbruchschwellenwert iterativ zu korrigieren, bis die Iteration den Iterationsabbruchschwellenwert erfüllt, und eine Elektrizitätskohlenstoffemissionsfaktormatrix jeder der Regionen nach der iterativen Korrektur zu erhalten.

9. Computervorrichtung, umfassend mindestens einen Prozessor und einen Speicher, der mindestens ein Programm speichert, wobei das mindestens eine Programm durch den mindestens einen Prozessor ausgeführt wird, um das verteilte kollaborative Privatsphäre-Berechnungsverfahren für Kohlenstoffemissionen in einer Mehrzahl von Stromnetzen nach einem der Ansprüche 1 bis 6 zu implementieren.

10. Computerlesbares Speichermedium, wobei ein Computerprogramm auf dem computerlesbaren Speichermedium gespeichert ist und das Computerprogramm ausgeführt wird, um das verteilte kollaborative Privatsphäre-Berechnungsverfahren für Kohlenstoffemissionen in einer Mehrzahl von Stromnetzen nach einem der Ansprüche 1 bis 6 zu implementieren.

**Revendications**

1. Procédé de calcul de confidentialité collaboratif distribué pour émission de carbone dans une pluralité de réseaux électriques, comprenant :

   obtenir une quantité d'électricité transférée entre des régions, obtenir une capacité de génération d'une sous-région sous la juridiction de chacune des régions, une quantité d'électricité transférée entre sous-régions, et une capacité de génération d'énergie de la sous-région, et construire une matrice d'échange de quantité d'électricité entre les régions, et une matrice d'informations de génération d'énergie, une matrice d'échange de quantité d'électricité et une matrice d'informations d'émission de carbone de génération d'énergie de chacune des régions sur la base des informations obtenues ;
   calculer une matrice d'informations de flux de carbone d'électricité correspondante sur la base de la matrice d'informations de génération d'énergie et de la matrice d'échange de quantité d'électricité de chacune des régions ; et
   construire une équation d'équilibre d'émission de carbone d'électricité basée sur la matrice d'informations de flux de carbone d'électricité et la matrice d'informations d'émission de carbone de génération d'énergie de chacune des régions, et la matrice d'échange de quantité d'électricité entre les régions, et calculer une matrice de facteurs d'émission de carbone d'électricité de chacune des régions, la matrice de facteurs d'émission de carbone d'électricité de la région comprenant un facteur d'émission de carbone d'électricité de la sous-région sous la juridiction de la région.

2. Procédé selon la revendication 1, dans lequel l'équation d'équilibre d'émission de carbone d'électricité est exprimée par une formule de calcul suivante :

$$\begin{bmatrix} M_1 & \dots & P_{\tau 1} & \dots & P_{L1} \\ \vdots & \ddots & \vdots & \dots & \vdots \\ P_{1\tau} & \dots & M_\tau & \dots & P_{L\tau} \\ \vdots & \dots & \vdots & \ddots & \vdots \\ P_{1L} & \dots & P_{\tau L} & \dots & M_L \end{bmatrix} \begin{bmatrix} \lambda_1 \\ \vdots \\ \lambda_\tau \\ \vdots \\ \lambda_L \end{bmatrix} = \begin{bmatrix} C_1 \\ \vdots \\ C_\tau \\ \vdots \\ C_L \end{bmatrix}$$

   où $M_\tau$ représente une matrice d'informations de flux de carbone d'électricité d'une $\tau^{iéme}$ région ; $P_{\tau L}$ représente une matrice d'échange de quantité d'électricité de la $\tau^{ième}$ région à une $L^{ième}$ région ; $P_{L\tau}$ représente une matrice d'échange de quantité d'électricité de la $L^{iéme}$ région à la $\tau^{ième}$ région ; $\lambda_\tau$ représente une matrice de facteurs d'émission de carbone d'électricité de la $\tau^{ième}$ région ; et $C_\tau$ représente une matrice d'informations d'émission de carbone de génération d'énergie de la $\tau^{ième}$ région.

3. Procédé selon la revendication 2, dans lequel la matrice de facteurs d'émission de carbone d'électricité est calculée conformément à une formule de calcul suivante :

$$\lambda_\tau = \lambda_\tau^{(0)} - \sum_\mu D_{\mu\tau}\lambda_\mu$$

où

$$\lambda_\tau^{(0)} = M_\tau^{-1} C_\tau$$

$$D_{\mu\tau} = M_\tau^{-1} P_{\mu\tau}$$

où $\lambda_\tau$ représente la matrice de facteurs d'émission de carbone d'électricité de la $\tau^{iéme}$ région ; $C_\tau$ représente la matrice d'informations d'émission de carbone de génération d'énergie de la $\tau^{iéme}$ région ; $\lambda_\mu$ représente une matrice de facteurs d'émission de carbone d'électricité d'une $\mu^{iéme}$ région ; $P_{\mu\tau}$ représente une matrice d'échange de quantité d'électricité de la $\mu^{iéme}$ région à la $\tau^{iéme}$ région ; $M_\tau$ représente la matrice d'informations de flux de carbone d'électricité de la $\tau^{iéme}$ région; $D_{\mu\tau}$ représente une matrice de flux d'énergie interactive entre sous-régions de la $\mu^{iéme}$ région à la $\tau^{iéme}$ région ; et $\lambda_\tau^{(0)}$ représente une valeur d'itération initiale de la matrice de facteurs d'émission de carbone d'électricité de la $\tau^{iéme}$ région.

4. Procédé selon la revendication 1, dans lequel la matrice d'informations de génération d'énergie de la région est exprimée par une formule de calcul suivante :

$$E = \begin{bmatrix} E_1 & 0 & \cdots & 0 & \cdots & 0 \\ 0 & E_2 & \cdots & 0 & \cdots & 0 \\ \vdots & \vdots & \ddots & \vdots & \cdots & \vdots \\ 0 & 0 & \cdots & E_i & \cdots & 0 \\ \vdots & \vdots & \vdots & \vdots & \ddots & \vdots \\ 0 & 0 & \cdots & 0 & \cdots & E_N \end{bmatrix}$$

où E représente la matrice d'informations de génération d'énergie de la région, $E_i$ représente une capacité de génération d'une $i^{ème}$ sous-région sous la juridiction de la région, et N représente une quantité de sous-régions sous la juridiction de la région ; la matrice d'échange de quantité d'électricité de la région est exprimée par une formule de calcul suivante :

$$P = \begin{bmatrix} 0 & P_{2,1} & \cdots & P_{i,1} & \cdots & P_{N,1} \\ P_{1,2} & 0 & \cdots & P_{i,2} & \cdots & P_{N,2} \\ \vdots & \vdots & \ddots & \vdots & \cdots & \vdots \\ P_{1,j} & P_{2,j} & \cdots & 0 & \cdots & P_{N,j} \\ \vdots & \vdots & \vdots & \vdots & \ddots & \vdots \\ P_{1,N} & P_{2,N} & \cdots & P_{i,N} & \cdots & 0 \end{bmatrix}$$

où P représente la matrice d'échange de quantité d'électricité de la région, $P_{i,j}$ représente une quantité d'électricité transférée de la $i^{ème}$ sous-région à une $j^{ème}$ sous-région, et N représente la quantité de sous-régions sous la juridiction de la région ; et la matrice d'informations d'émission de carbone de génération d'énergie de la région est exprimée par une formule de calcul suivante :

$$C = \begin{bmatrix} \sum_m E_{1,m} \varepsilon_m \\ \sum_m E_{2,m} \varepsilon_m \\ \vdots \\ \sum_m E_{i,m} \varepsilon_m \\ \vdots \\ \sum_m E_{N,m} \varepsilon_m \end{bmatrix}$$

où C représente la matrice d'informations d'émission de carbone de génération d'énergie de la région, $E_{i,m}$ représente une capacité de génération d'un $m^{ième}$ type d'énergie dans la $i^{ième}$ sous-région, et $\varepsilon_m$ représente un facteur d'émission de carbone de génération d'énergie correspondant à la capacité de génération du $m^{ième}$ type d'énergie.

5. Procédé selon la revendication 4, dans lequel la matrice d'informations de flux de carbone d'électricité de la région est calculée selon une formule de calcul suivante :

$$M = E - P + diag(P[1])$$

où **M** représente la matrice d'informations de flux de carbone d'électricité de la région, **E** représente la matrice d'informations de génération d'énergie de la région, **P** représente la matrice d'échange de quantité d'électricité de la région, **[1]** représente un vecteur qui contient seulement 1, **P[1]** représente un vecteur obtenu par multiplication de la **P** et du **[1],** et $diag(P[1])$ représente une opération consistant à placer le vecteur sur une diagonale d'une matrice, un élément non diagonal étant à 0.

6. Procédé selon la revendication 1, après le calcul d'une matrice de facteurs d'émission de carbone d'électricité de chacune des régions, comprenant en outre :
corriger de façon itérative la matrice de facteurs d'émission de carbone d'électricité entre les régions par paires à l'aide d'une méthode itérative de Jacobi par blocs basée sur un seuil de fin d'itération prédéfini, jusqu'à ce que l'itération satisfasse le seuil de fin d'itération, et obtenir une matrice de facteurs d'émission de carbone d'électricité de chacune des régions après la correction itérative.

7. Système de calcul de confidentialité collaboratif distribué pour émission de carbone dans une pluralité de réseaux électriques, comprenant :

un module de construction de matrices configuré pour obtenir une quantité d'électricité transférée entre régions, obtenir une capacité de génération d'une sous-région sous la juridiction de chacune des régions, une quantité d'électricité transférée entre sous-régions et une capacité de génération d'énergie de la sous-région, et construire une matrice d'échange de quantité d'électricité entre les régions et une matrice d'informations de génération d'énergie, une matrice d'échange de quantité d'électricité et une matrice d'informations d'émission de carbone de génération d'énergie de chacune des régions sur la base des informations obtenues ;
un module de calcul de matrice configuré pour calculer une matrice d'informations de flux de carbone d'électricité correspondante sur la base de la matrice d'informations de génération d'énergie et de la matrice d'échange de quantité d'électricité de chacune des régions ; et
un module de calcul de facteur d'émission de carbone d'électricité configuré pour construire une équation d'équilibre d'émission de carbone d'électricité basée sur la matrice d'informations de flux de carbone d'électricité et la matrice d'informations d'émission de carbone de génération d'énergie de chacune des régions, et la matrice d'échange de quantité d'électricité entre les régions, et calculer une matrice de facteurs d'émission de carbone d'électricité de chacune des régions, la matrice de facteurs d'émission de carbone d'électricité de la région comprenant un facteur d'émission de carbone d'électricité de la sous-région sous la juridiction de la région.

8. Système selon la revendication 7, dans lequel, après que le module de calcul de facteur d'émission de carbone d'électricité calcule la matrice de facteurs d'émission de carbone d'électricité de chacune des régions, le système comprend en outre :

un module de correction itérative configuré pour corriger de manière itérative la matrice de facteurs d'émission de carbone d'électricité entre les régions par paires à l'aide d'une méthode itérative de Jacobi par blocs basée sur un seuil de fin d'itération prédéfini, jusqu'à ce que l'itération satisfasse le seuil de fin d'itération, et obtenir une matrice de facteurs d'émission de carbone d'électricité de chacune des régions après la correction itérative.

9. Dispositif informatique, comprenant au moins un processeur et une mémoire configurée pour stocker au moins un programme, dans lequel

l'au moins un programme est exécuté par l'au moins un processeur pour mettre en œuvre le procédé de calcul de confidentialité collaboratif distribué pour émission de carbone dans une pluralité de réseaux électriques selon l'une quelconque des revendications 1 à 6.

10. Support de stockage lisible par ordinateur, dans lequel un programme d'ordinateur est stocké sur le support de stockage lisible par ordinateur, et le programme d'ordinateur est exécuté pour mettre en œuvre le procédé de calcul de confidentialité collaboratif distribué pour émission de carbone dans une pluralité de réseaux électriques selon l'une quelconque des revendications 1 à 6.

Obtain a transferred electricity quantity between regions, obtain a generating capacity of a sub-region under jurisdiction of each region, a transferred electricity quantity between sub-regions, and a generating capacity of energy of the sub-region, and construct an electricity quantity exchange matrix between the regions, and a power generation information matrix, an electricity quantity exchange matrix, and a power-generation carbon emission information matrix of each region based on the obtained information

Step 1

Calculate a corresponding electricity carbon flow information matrix based on the power generation information matrix and the electricity quantity exchange matrix of each region

Step 2

Construct an electricity carbon emission balance equation based on the electricity carbon flow information matrix and the power-generation carbon emission information matrix of each region, and the electricity quantity exchange matrix between the regions, and calculate an electricity carbon emission factor matrix of each region, where the electricity carbon emission factor matrix of the region is constituted by an electricity carbon emission factor of the sub-region under the jurisdiction of the region

Step 3

**FIG. 1**

**FIG. 2**

| Distributed collaborative privacy calculation method for carbon emission in a plurality of power grids | | |
|---|---|---|
| Terminal of a company in a region 1 | Terminal of a company in a region 2 | · · · · · · |

**Region 1:**

Start

Obtain a generating capacity of each province under jurisdiction of the company and an inter-provincial exchanged electricity quantity to constitute $M_1$

Obtain a generating capacity of each type of energy to constitute in combination with a power generation factor $C_1$

Calculate an initial iteration factor $\lambda_1^{(0)}$, and set k=0 and T=0.0001

Calculate a matrix $D_{\mu,1} = M_1^{-1} P_{\mu,1}$

Send $\lambda_1^{(k)}$ to each region

Receive $\lambda_\mu^{(k)}$ from other regions

$\lambda_1^{(k+1)} = \lambda_1^{(0)} - \sum_\mu D_{\mu,1} \lambda_\mu^{(k)}$

If $\left\| \lambda_1^{(k)} - \lambda_1^{(k+1)} \right\| < T$ ?  — Y

N

$k = k+1$

End

**Region 2:**

Start

Obtain a generating capacity of each province under jurisdiction of the company and an inter-provincial exchanged electricity quantity to constitute $M_2$

Obtain a generating capacity of each type of energy to constitute in combination with a power generation factor $C_2$

Calculate an initial iteration factor $\lambda_2^{(0)}$, and set k=0 and T=0.0001

Calculate a matrix $D_{\mu,2} = M_2^{-1} P_{\mu,2}$

Send $\lambda_2^{(k)}$ to each region

Receive $\lambda_\mu^{(k)}$ from other regions

$\lambda_2^{(k+1)} = \lambda_2^{(0)} - \sum_\mu D_{\mu,2} \lambda_\mu^{(k)}$

If $\left\| \lambda_2^{(k)} - \lambda_2^{(k+1)} \right\| < T$ ?  — Y

N

$k = k+1$

End

**FIG. 3**

**FIG. 4**

Matrix construction module

Matrix calculation module

Electricity carbon emission
factor calculation module

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 115481898 A